# EUROPEAN PATENT APPLICATION

(11) **EP 3 978 320 A2**
(43) Date of publication of application: **06.04.2022**
(21) Application number: 21198530.4
(22) Date of filing: 23.09.2021
(51) Int. Cl.: B60R 21/015

(54) **WIRELESS SENSOR ARRAY FOR OCCUPANCY DETECTION IN PASSENGER VEHICLES**

(30) Priority: 30.09.2020 US 202017038802
(71) Applicant: Littelfuse, Inc., Chicago, IL 60631 (US)
(72) Inventor: KRUGER, Jay, Chicago, 60631 (US); MARTINEZ, Cesar, Chicago, 60631 (US); FANG, Xudong, Chicago, 60631 (US)
(74) Representative: Arnold & Siedsma

(57) **Abstract**

An occupancy detection system consists of a master controller for a series of joined receivers consisting of reader modules and transponder modules in close proximity to one another. The reader modules are able to both send power to the transponder modules wirelessly and receive signals from the transponder modules, where the transponder modules are sending signals based on information received from buckle sensors, occupancy sensors, or both. The transponder modules, set in each seat of the vehicle, will get the latch/unlatch signals from the buckles, and send this information back through the reader modules to the main controller. The main controller will interface with the vehicle to provide user interface notifications.

## Description

### Field of the Disclosure

Embodiments of the present disclosure relate to vehicle sensing techniques and, more particularly, to a technique for wireless occupancy sensing in a passenger vehicle.

### Background

Automobile manufacturers are adding many features to vehicles for comfort and entertainment. The number of interfaces to support the features has thus grown. The seat belt has been a standard feature in vehicles for decades.

Some passenger vehicles allow seats to be removed from the seat frame. A vehicle bus standard known as the Controller Area Network (CAN) is used for communication between devices in the vehicle. Incorporating seat belt functions in seats that can be removed with the CAN interface can be challenging.

It is with respect to these and other considerations that the present improvements may be useful.

### Summary

This Summary is provided to introduce a selection of concepts in a simplified form that are further described below in the Detailed Description. This Summary is not intended to identify key or essential features of the claimed subject matter, nor is it intended as an aid in determining the scope of the claimed subject matter.

An exemplary embodiment of an occupancy detection system for use in a vehicle is disclosed. The occupancy detection system includes a main controller with a microcontroller, a transponder module connected to a buckle sensor by a buckle sensor wire, and a reader module connected to the main controller by a main controller wire. The transponder communicates wirelessly with the reader module.

An exemplary embodiment of a method to detect occupancy in a vehicle is also disclosed. The method consists of sending a read request command to a reader module by a reader chip. The reader module is disposed in a seat frame of the vehicle and the read request command is in response to a request for occupancy detection of a seat located in the seat frame. The reader module wirelessly delivers a read request to a transponder module, based on the read request command from the reader chip. The reader module wirelessly receives sensor information pertaining to the seat from the transponder module. The sensor information is received by a Controller Area Network (CAN) system of the vehicle.

An exemplary embodiment of a method to deliver power to components in a vehicle is also disclosed. The method consists of receiving an indication that a transponder module in the vehicle needs to be recharged by a reader chip. The reader chip uses a multiplexer to select a reader module associated with the transponder module. The reader chip then sends a power delivery command to the reader module, which is located in a seat frame of the vehicle. The reader module then wirelessly delivers power to the transponder module.

### Brief Description of the Drawings

**FIG. 1** is a diagram illustrating an occupancy detection system for occupancy detection within a vehicle, in accordance with exemplary embodiments;
**FIG. 2** is a diagram illustrating a wired portion of the occupancy detection system of **FIG. 1****,** in accordance with exemplary embodiments;
**FIG. 3** is a diagram illustrating possible seat frames of a vehicle in which the occupancy detection system of **FIG. 1** may be implemented, in accordance with exemplary embodiments;
**FIG. 4** is a diagram illustrating a wireless configurable array of the occupancy detection system of **FIG. 1****,** in accordance with exemplary embodiments;
**FIG. 5** is a diagram illustrating a single seat and respective seat frame of a vehicle implementing the occupancy detection system of **FIG. 1****,** in accordance with exemplary embodiments;
**FIG. 6** is a perspective view illustrating a seat assembly of a vehicle to implement the occupancy detection system of **FIG. 1****,** in accordance with exemplary embodiments;
**FIGs. 7A** and **7B** are a side view and a perspective view illustrating the transponder module of the occupancy detection system of **FIG. 1****,** in accordance with exemplary embodiments;
**FIGs. 8A** and **8B** are a side view and a perspective view illustrating the reader module of the occupancy detection system of **FIG. 1****,** in accordance with exemplary embodiments;
**FIG. 9** is a flow diagram illustrating power operations performed by the occupancy detection system of **FIG. 1****,** in accordance with exemplary embodiments; and
**FIG. 10** is a flow diagram illustrating communication operations performed by the occupancy detection system of **FIG. 1****,** in accordance with exemplary embodiments;

### Detailed Description

An occupancy detection system for occupancy detection featuring a wireless configurable array for a vehicle is disclosed herein. The occupancy detection system consists of a main controller to interface to a sensing system within the vehicle. The sensing system consists of a series of reader modules (receivers) and transponder modules. The reader modules interface with a near field communication (NFC) microcontroller and a microchip integrated with a local interconnect network (LIN) transceiver, to both deliver power to the transponder modules and receive occupancy and buckle latch sense information from the transponder modules. The reader locations may be customized according to the manufacturing requirements of the vehicle. A series of NFC transponders are connected to buckle latches and occupancy sensors within the vehicle. Using the wireless configurable array, sensor power is provided wirelessly from the readers to the sensors.

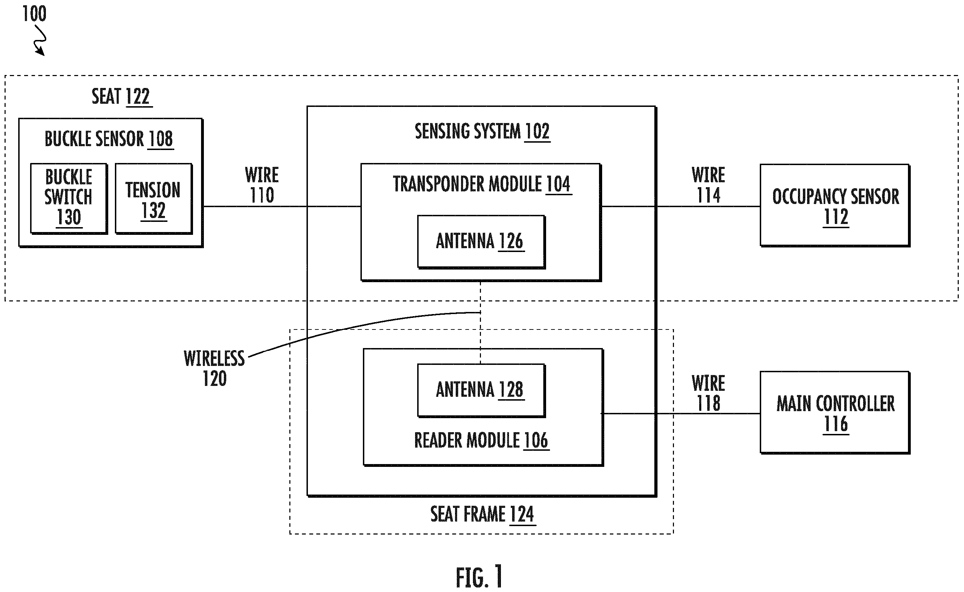

**FIG. 1** is a representative drawing of an occupancy detection system 100 for occupancy detection within a vehicle, according to exemplary embodiments. The occupancy detection system 100 is designed to enable a driver of a vehicle to ensure that all passengers in the vehicle are properly secured in a seat belt (also known as a safety belt or safety harness), preferably, before commencement of vehicle movement. As used herein, reference to "occupancy detection" is meant to include one or more of presence detection (whether a passenger is occupying a seat of the vehicle), buckle switch detection (whether the seat belt has been engaged or disengaged), and tension detection (whether the seat belt is at a proper tension during occupancy).

The occupancy detection system 100 includes a sensing system 102 for performing the occupancy detection. The sensing system 102 consists of a transponder module 104 and a reader module 106, also known as a receiver. Communication between the transponder module 104 and the reader module 106 takes place via respective antennas 126 and 128. The two antennas 126 and 128 communicate with one another wirelessly, as indicated by the "wireless connection" 120 between them. In an exemplary embodiment, this wireless connection 120 utilizes a Near Field Communication (NFC) protocol, a form of short-range wireless communication between compatible devices. NFC is a set of communication protocols for communication between two electronic devices over a distance of 4cm or less (about 1 ½ inches). In another embodiment, the two antennas 126 and 128 communicate using a protocol besides NFC, such as Radio Frequency Identification (RFID), of which NFC is a subset, Bluetooth Low Energy (also known as Beacons), Quick Response (QR) codes, WiFi, Zigbee, Z-Wave, Light Fidelity (LiFi), Ultrasonic, and Chirpcast, to name a few.

The occupancy detection system 100 is used in a vehicle in which one or more seats may be removable. The vehicle in the disclosed embodiments consists of one or more removable seats 122 to be positioned into respective seat frames 124, the latter of which are stationary (not removable by the customer/consumer of the vehicle). The number of seats monitored by the occupancy detection system 100 is not limited and the principles disclosed herein are operable for vehicles with any number of seats. In an exemplary embodiment, the transponder module 104 of the sensing system 102 is located in the seat 122 of the vehicle while the reader module 106 is located in the seat frame 124. As will be shown, the two modules 104 and 106 of the sensing system 102 are positioned in close proximity when the seat 122 is fully engaged in its respective seat frame 124 inside the vehicle, thus enabling the wireless communication 120 between them.

In exemplary embodiments, the transponder module 104 of the sensing system 102 is connected to a buckle sensor 108 and/or an occupancy sensor 112. The buckle sensor 108 provides data to the transponder module 104 relating to both buckle switch 130 and tension 132 for a given seat 122 whereas the occupancy sensor 112 provides data to the transponder module relating to presence detection (occupancy) of the seat. Although the tension sensing 132 is shown as part of the buckle sensor 108, the tension sensing may be optionally performed by a distinct sensor (not shown) that would be supported by the occupancy detection system 100. These devices are connected to the transponder by respective buckle sensor wire 110 and occupancy sensor wire 114. Both the buckle sensor 108 and the occupancy sensor 112 are attached to the seat 122. Therefore, if the seat 122 is removed from the vehicle, the transponder 104, buckle sensor 108, and occupancy sensor 112, as well as the buckle sensor wire 110 and occupancy sensor wire 110 will likewise be removed. In an exemplary embodiment, the buckle sensor wire 110 and the occupancy sensor wire 114 are thus fixably coupled to the seat 122 in a manner to avoid damage to the wires during removal of the seat 122 from its respective seat frame 124 as well as subsequent re-attachment of the seat to the seat frame.

In exemplary embodiments, the reader module 106 of the sensing system 102, which is affixed to the seat frame 124, is connected to a main controller 116, also known herein as a master controller or control box. The reader module 106 is connected to the main controller 116 by a main controller wire 118. In one embodiment, the main controller 116 is located near or is part of a master vehicle control unit, which may be in the dashboard of the vehicle, behind the glove compartment of the vehicle, near the steering column of the vehicle, or at some other location that is some distance from the one or more seats 122 of the vehicle. Because the seat frame 124 of the vehicle is not moved, the main controller wire 118 may be fixably attached to the seat frame and hidden from view such that damage to the wire and connected components is avoided. Further, the main controller wire 118 may be one of an array of wires (not shown) connecting all the seats of the vehicle to the main controller 116.

In exemplary embodiments, the buckle sensor wire 110 and the occupancy sensor wire 114 of the seat 122 establish a point-to-point connection between the transponder module 104 and the buckle sensor 108 and the occupancy sensor 112, respectively. Similarly, the main controller wire 118 of the seat frame 124 establishes a point-to-point connection between the reader module 106 and the main controller 116. In a first embodiment, the buckle sensor wire 110, the occupancy sensor wire 114, and the main controller wire 118 utilize a Radio Frequency (RF) cable. In a second embodiment, the buckle sensor wire 110, the occupancy sensor wire 114, and the main controller wire 118 utilize a two-wire harness. In an exemplary embodiment, the buckle sensor wire 110, the occupancy sensor wire 114, and the main controller wire 118 include a protective cable to provide shielding protection.

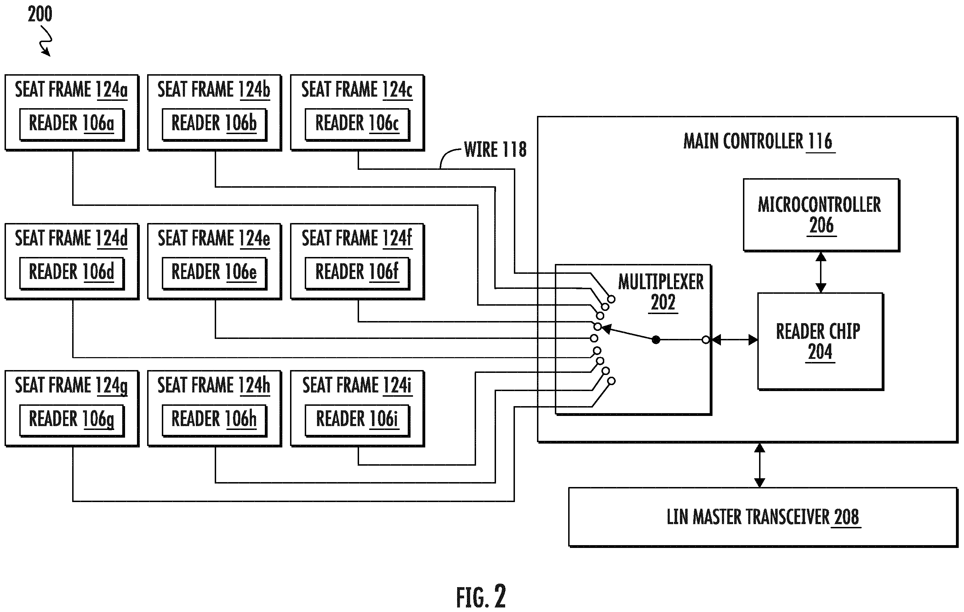

**FIG.** 2 is a representative drawing of a wired portion 200 of the occupancy detection system 100 of FIG. 1, according to exemplary embodiments. The main controller 116, introduced in FIG. 1, is connected to the reader modules 106 associated with the seat frames 124 in an array of seat frames; in this example, there are nine seat frames 124a-124i and nine respective reader modules 106a-106i. The principles described herein may be applied to a vehicle with any number of seats. Each reader module 106 associated with its respective seat frame 124 is connected to a multiplexer 202 of the main controller 116. The main controller 116 further includes a reader chip 204 connected between the multiplexer 202 and a microcontroller 206. In an exemplary embodiment, the microcontroller 206 is an NFC microcontroller.

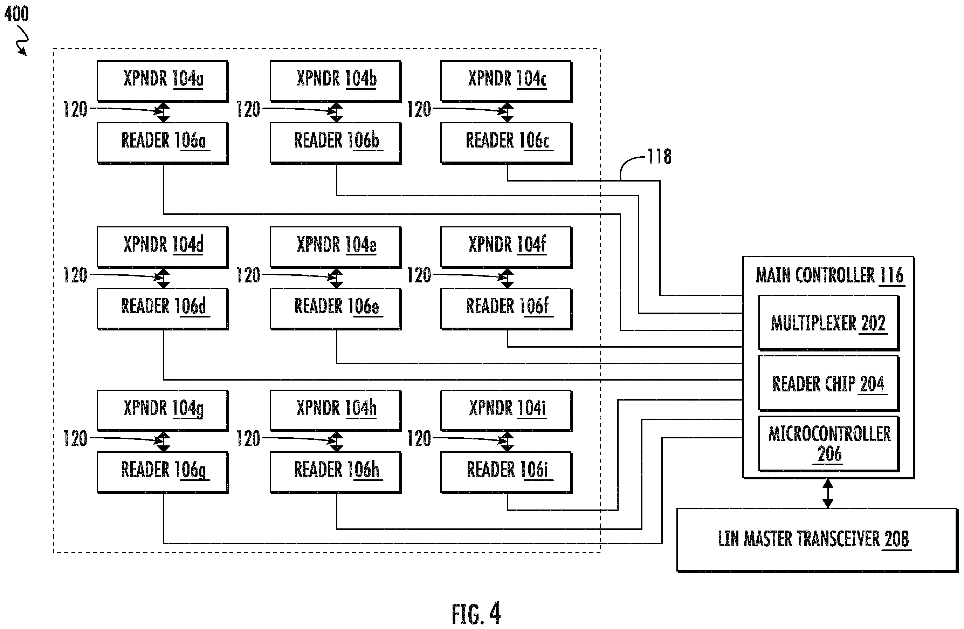

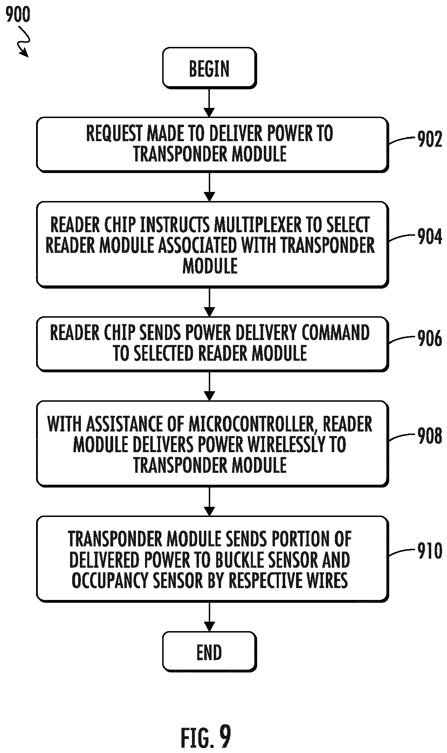

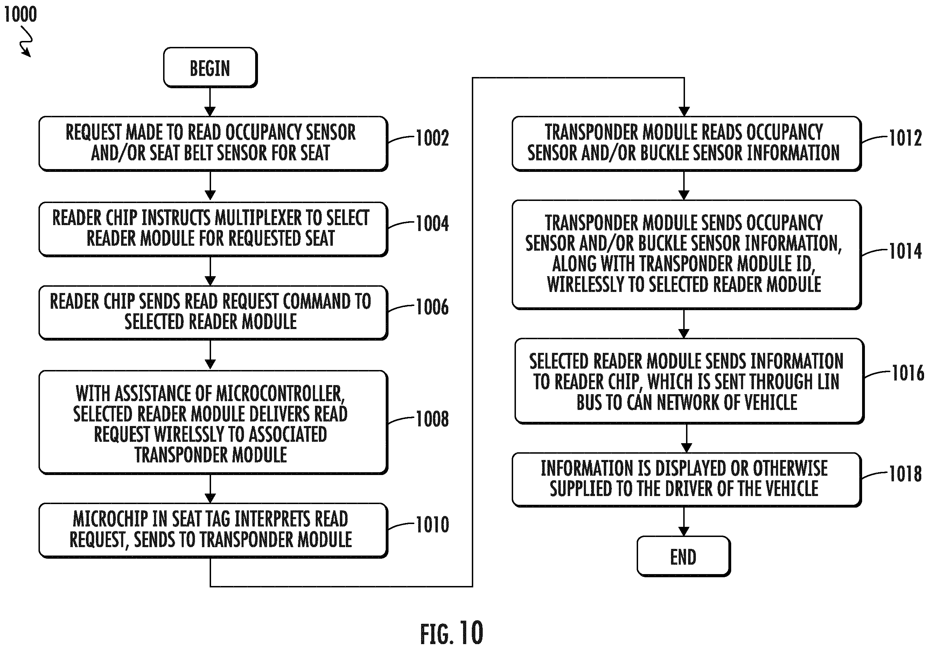

In exemplary embodiments, the multiplexer 202, controlled by the reader chip 204, will select one of the reader modules 106 associated with respective seat frames 124 at a time to perform some action. The action may be either sending power to the devices or reading data from the devices. These actions are described in more detail in **FIGs. 9** and **10****,** below. **FIG. 1** shows the reader module 106 being part of the seat frame 124. In the array of seat frames 124a-124i, each seat frame will have its own separate reader module 106a-106i, and all reader modules will be connected by main controller wires 118 that connect to the main controller 116. The array of reader modules 106a-106i thus provide a framework for the wireless configurable array, described in **FIG. 4****,** below.

In exemplary embodiments, both the reader chip 204 and the microcontroller 206 of the main controller 116 are involved in the communication that takes place between the reader modules and the transponder modules (not shown) via their respective antennas. The reader chip 204 instructs each reader module 106 to deliver power to its respective transponder module 104, as well as respective buckle sensors 108 and occupancy sensors 112. The reader chip 204 also instructs each reader module 106 to read data from its respective transponder module 104. The microcontroller 206 enables the wireless communication between the reader module 106 and its respective transponder module 104 (using the antennas 126 and 128). Where it is an NFC microcontroller, the wireless communication utilizes the NFC protocol.

In exemplary embodiments, the main controller 116 is integrated with a Local Interconnect Network (LIN) master transceiver 208. A LIN network is a single-ended, serial network protocol that utilizes a single wire to connect numerous internal nodes to a central control modules. Multiple LIN slaves may be controlled by a single master slave. The Controller Area Network (CAN) bus is a vehicle bus standard designed to allow microcontrollers and devices to communicate with each other's applications without a host computer. Operating as a sub-bus of the CAN bus, the LIN network provides a multipoint, low-cost, easily implemented communication bus. Many systems in the car communicate using LIN (e.g., steering wheel, comfort, power train, door, seats). Therefore, the LIN bus is an established channel to communicating data to the controlling units in the vehicle.

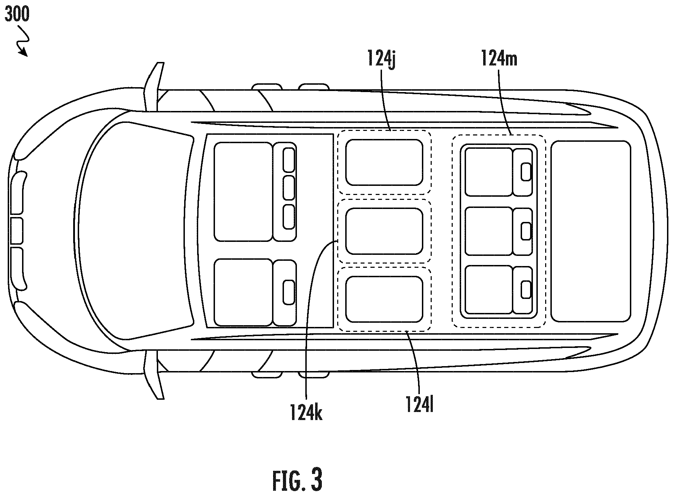

**FIG. 3** is a diagram of a vehicle 300 having four seat frames 124j-124l, in accordance with exemplary embodiments. These four seat frames 124j-124l may be monitored/controlled by the occupancy detection system 100 of **FIG. 1** so that the driver can know that occupants of the respective seats associated with these seat frames are safe before the vehicle is in motion. The occupancy detection system 100 may operate with an unlimited number of seats within a vehicle.

**FIG. 4** is a representative drawing of a wireless configurable array 400 of the occupancy detection system 100 of **FIG. 1****,** according to exemplary embodiments. Continuing with the example seat frame array of **FIG. 2****,** the wireless configurable array 400 consists of coupled transponder modules 104a-i and respective reader modules 106a-i which wirelessly communicate with one another via antennas (not shown). Though the reader modules 106a-i are connected by main controller wires 118 to the main controller 116, the reader modules 106a-i are wirelessly "connected" to respective transponder modules 104a-i. The main controller 116 interfaces with the LIN master transceiver 208 to facilitate control of devices. The LIN master transceiver 208 will acquire the sensory data collected by the occupancy detection system 100 and send the data through the LIN bus to inform the parent system in the vehicle, which will then take the appropriate action.

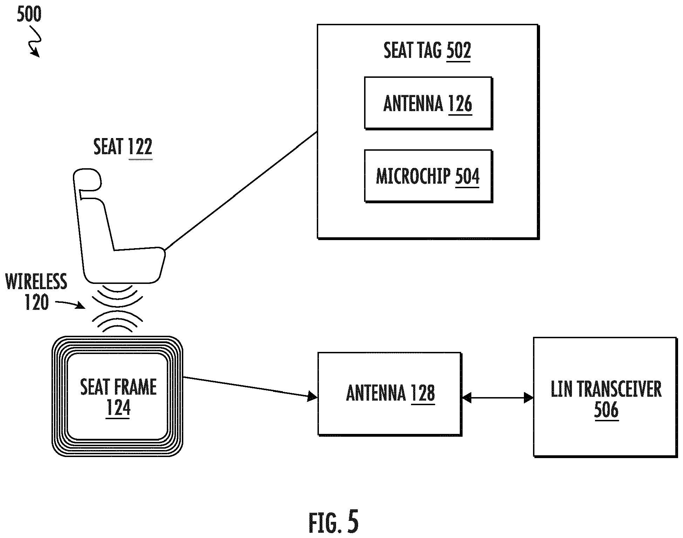

**FIG. 5** is a representative drawing 500 showing a single seat 122 and respective seat frame 124, according to exemplary embodiments. The seat 122 includes a seat tag 502 and a microchip 504, along with the antenna 126 introduced in **FIG. 1****,** whereas the seat frame 124 just has the antenna 128 (also in **FIG. 1**). The antenna 126 is used by the transponder module 104 (not shown) to communicate wirelessly with the antenna 128 of the reader module 106 (not shown), and the microchip 504 controls operation of the transponder module. In an exemplary embodiment, the seat tag 502 is located very close to the transponder module 104. The seat frame also interfaces with a LIN transceiver 506. The LIN transceiver then interfaces with the vehicle system to communicate to the safety system protocol of the parent system. Often, LIN devices are associated in clusters. A LIN cluster is defined as a number of LIN nodes connected through a single physical cable. The LIN transceivers 506 connected to each seat frame 124 of the vehicle may be a single LIN cluster, as one example. Each cluster might include a gateway to the CAN bus in the vehicle. In this manner, data is transferred throughout the vehicle as needed in an efficient way.

The antenna 128 associated with the seat frame 124 is, in exemplary embodiments, located very close to the reader module 106 (not shown). **FIG. 2** shows that all seat frames 124 of the vehicle share a reader chip 204. By action of the multiplexer 202, the reader chip 204, one at a time, controls actions of the selected reader module 106. Thus, in exemplary embodiments, a single reader chip 204 controls all reader modules 106 in the vehicle while each transponder 104 is controlled by a separate microchip 504.

Thus, each seat 122 of the vehicle includes a seat tag 502. In an exemplary embodiment, the microchip 504 and the antenna 126 of the seat tag 502 are battery powered. In one embodiment, power is supplied to the microchip 504 and the antenna 126 via a wireless mechanism, such as a Q interface.

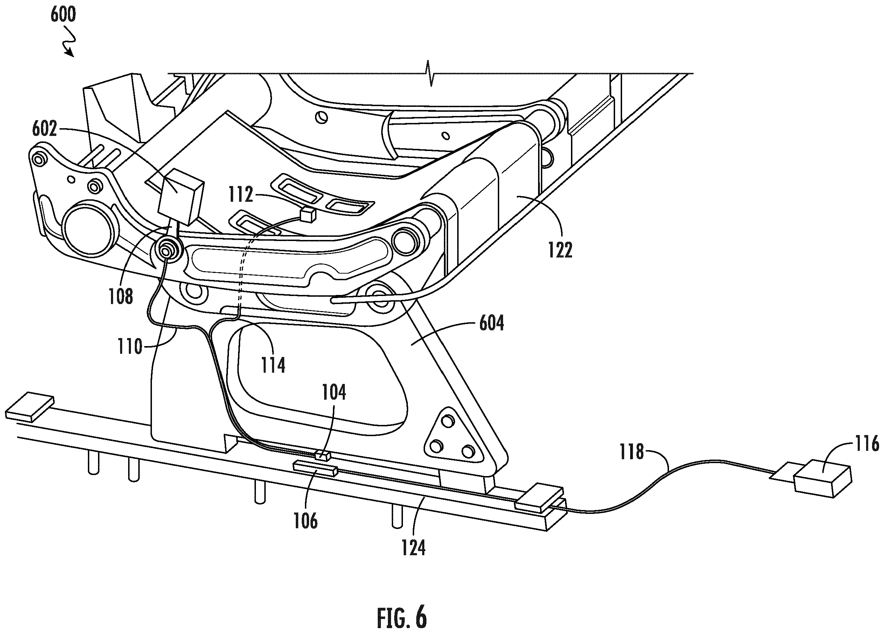

**FIG. 6** is a representative drawing 600 of the seat assembly of a vehicle, according to exemplary embodiments. The seat 122, occupancy sensor 112, occupancy sensor wire 114, buckle sensor 108, buckle sensor wire 110, transponder module 104, reader module 106, seat frame (rail) 124, main controller wire 118, and main controller 116 (also known as the control box) were first introduced in **FIG. 1****.** The drawing 600 also shows a seat belt buckle 602 and a seat leg 604. In exemplary embodiments, if the seat 122 is removed from the vehicle, the seat leg 604 is also removed. Put another way, the seat leg 604 is fixably attached to the seat 122 and not removable (by the consumer/owner of the vehicle). This ensures that the transponder module 104 stays with the respective seat 122 of the vehicle.

The reader module 106, on the other hand, is part of the seat frame 124, the rail portion of which is shown in the drawing 600. When the seat 122 is in place in the seat frame 124, the transponder module 104 and the reader module 106 are positioned in close proximity to one another, with the transponder module being "above" the reader module. This close proximity allows protocols such as NFC to be used to enable wireless communication between the two modules.

Although the main controller 116 is shown in the drawing 600, in exemplary embodiments, the main controller is some distance from the seat 122 and seat frame 124, connected by the main controller wire 118 to the reader module 106. The main controller 116 may, for example, be centrally located in the vehicle, as its reader chip 204 and microcontroller 206 (**FIG. 2**) will be controlling the reader modules 106 for multiple seats located in the vehicle.

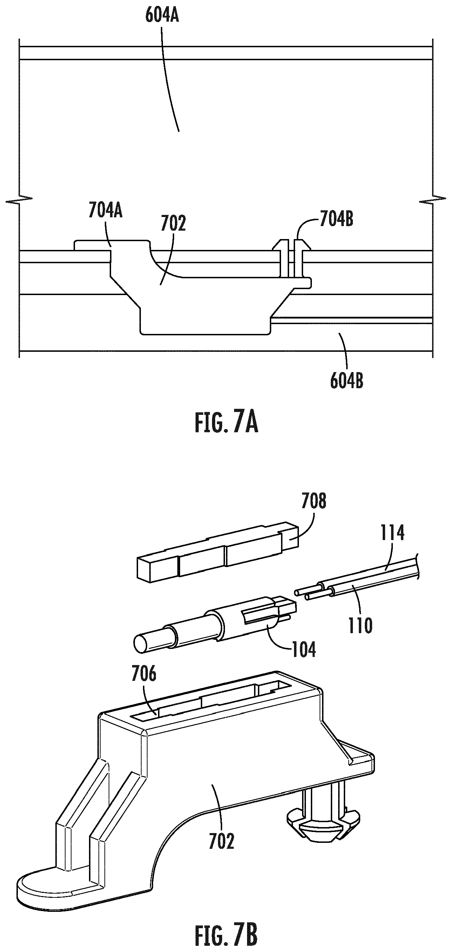

**FIGs. 7A** and **7B** illustrate the transponder module 104, according to exemplary embodiments. In **FIG. 7A****,** a transponder housing 702 for the transponder module 104 is connected between two portions 604A and 604B of the seat leg 604 (**FIG. 6**), the two portions being, in this example, parallel to one another. The portion 604A is the seat leg whereas the portion 604B is a floor portion such as carpet. When the seat 122 is removed from the vehicle, the seat leg 604A will likewise be removed, but the floor portion 604B will not be removed. This ensures that the transponder module 104 stays with the seat 122, since the seat leg 604A is affixed to the seat (see, e.g., **FIG. 6**). There is no connection/assembly between the transponder housing 702 and the floor portion 604B. The transponder housing 702 includes two different types of connection means 704A and 704B for fixable coupling of the transponder housing to the seat leg 604. In one embodiment, the transponder housing 702 is connected to the seat leg 604 using a snap-in mechanism. In an second embodiment, the transponder housing 702 is connected to the seat leg 604 using a screw-in mechanism. In a third embodiment, the transponder housing 702 is connected to the seat leg 604 using adhesive. In an alternative embodiment, the seat 122 includes a prefabricated pocket which enable placement and encapsulation of the transponder module 104 therein. Designers of ordinary skill in the art will recognize a number of different ways in which the transponder housing may be fixably connected to the seat leg.

In **Fig. 7B****,** the transponder housing 702 is shown in a flipped (upside down) position, relative to the view of drawing 700A. The transponder housing 702 shows an opening 706 inside which the transponder module 104 is placed. The transponder housing 702 includes one or more additional opening(s) (not shown) through which the buckle sensor wire 110, tension sensor wire (if separately controlled) and occupancy sensor wire 114 may thread, for connection to the transponder module 104 once the module is placed in the opening 706. Although in **FIG. 1****,** the tension sensing 132 is shown, along with the buckle switch sensing 130, as part of the buckle sensor 108, the tension sensing may be optionally performed by a distinct sensor. In an exemplary embodiment, a covering 708 is placed over the transponder module 104 once the module is in place. In one embodiment, the covering 708 is an encapsulation material that is used to seal the opening 706. In a second embodiment, the covering 708 is affixed to the transponder module 104 using adhesive. In a third embodiment, there is no covering; instead, the transponder module 104 is covered in adhesive or surrounded in a thermoplastic shell to keep the module in place in the transponder housing 702. In exemplary embodiments, the opening 706 formed to be is approximately the size of the transponder module 104 plus the covering 708, ensuring a snug fit of the module and cover once inside the opening.

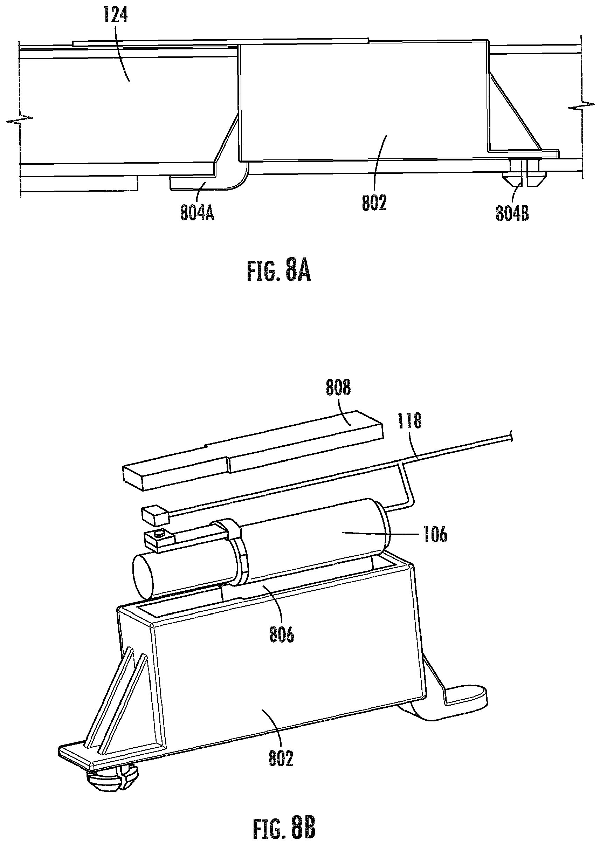

**FIGs. 8A** and **8B** illustrate the reader module 106, according to exemplary embodiments. In **FIG. 8A****,** a reader housing 802 for the reader module 106 is connected internal to the seat frame rail 124 so that the reader module 106 will be in line with the corresponding transponder module 104 (**FIG. 6**). Because the seat frame rail 124 is not removed from the vehicle, the reader housing 802 would likewise stay intact, ensuring that the reader module 106 stays with the seat frame 124. The reader housing 802 includes two different types of connection means 804A and 804B for fixable coupling of the reader housing to the seat frame rail 124. In one embodiment, reader housing 802 is connected to the seat frame rail 124 using a snap-in mechanism. In an second embodiment, the reader housing 802 is connected to the seat frame rail 124 using a screw-in mechanism. In a third embodiment, the reader housing 802 is connected to the seat frame rail 124 using adhesive. In a fourth embodiment, the seat frame 124 includes a prefabricated pocket which enable placement and encapsulation of the reader module 106 therein. Designers of ordinary skill in the art will recognize a number of different ways in which the reader housing may be fixably connected to the seat frame rail.

In **FIG. 8B****,** the reader housing 802 shows an opening 806 inside which the reader module 106 is placed. The reader housing 802 includes an additional opening (not shown) through which the main controller wire 118 may thread, for connection to the reader module 106 once the module is placed in the opening 706. In an exemplary embodiment, a covering 808 is placed over the transponder module 104 once the module is in place. In one embodiment, the covering 808 is a removable material that is shaped to the size of the opening 806. In a second embodiment, the covering 808 is affixed to the reader module 106 using adhesive. In a third embodiment, there is no covering; instead, the reader module 106 is covered in adhesive to keep the module in place in the reader housing 802. In exemplary embodiments, the opening 806 formed to be is approximately the size of the reader module 106 plus the covering 808, ensuring a snug fit of the module and cover once inside the opening.

### Power Delivery Mechanism

**FIG. 9** is a flow diagram featuring operations 900 performed by the occupancy detection system 100 of **FIG. 1** to deliver power to certain components, according to exemplary embodiments. The operations 900 begin with a request for power to be delivered to one of the transponder modules 104 in the vehicle (block 902). One or more of the transponder modules 104 and associated sensors 108, 112, may be low on power and in need of a recharge. Or, the occupancy detection system 100 may have a protocol for periodically updating the power to all transponder modules and their associated sensors within the vehicle. The reader chip 204 instructs the multiplexer 202 (**FIG. 2**) to select the reader module 106 associated with the transponder module 104 (block 904). Next, the reader chip 204 sends a power delivery command to the selected reader module (block 906). The power delivery command instructs the reader module 106 to send power wirelessly to its respective transponder module 104. The microcontroller 206 is responsible for the wireless transmission between each reader module 106 and its respective transponder module 104. In one embodiment, the power delivery is achieved using the NFC protocol. The reader module 106 thus, with the assistance of the microcontroller 206, delivers power wirelessly to the transponder module 104 (block 908). The transponder module 104 then delivers some of the received power to its connected buckle sensor 108 and occupancy sensor 112 via respective wires 110 and 114 (block 910). These operations may be repeated to deliver power to all transponder modules in the vehicle.

In exemplary embodiments, each reader module 106 and each transponder module 104 have unique identifiers (IDs), such as Radio Frequency IDs (RFIDs). Thus, despite each transponder module 104 being "associated" with the reader module 106 in close proximity thereto, it is possible that the associations between the two modules may change, such as when two seats are removed and are interchanged upon return to the vehicle. The IDs are thus used during communication between the transponder and reader modules in the vehicle.

### Communication Between Modules

**FIG. 10** is a flow diagram featuring operations 1000 performed by the occupancy detection system 100 of **FIG. 1** to communicate between modules, according to exemplary embodiments. Initially, a request is made to get information about the occupancy and/or seat belt buckle status for a given seat in the vehicle (block 1002). The reader chip 204 instructs the multiplexer 202 (**FIG. 2**) to select the reader module for the requested seat (block 1004). Next, the reader chip 204 transmits a read request command to the selected reader module (block 1006). Again, the microcontroller 206 controls the wireless communication between the reader module 106 and the transponder module 104. Thus, with the assistance of the microcontroller 206, the selected reader module 106 delivers the read request wirelessly to its respective transponder module 104 (block 1008).

Recall that every seat 122 has an associated seat tag 502 which includes the antenna 126 for the transponder module 104 as well as a microchip 504. As the reader chip 204 controls operation of the reader module 106 (allowing power to be delivered to devices (**FIG. 9**) and reading data from transponder module 104), the microchip 504 controls operation of the transponder module 104 (delivering data to reader module 106). Thus, the microchip 504 interprets the read request received from the reader module 106 and sends the read request to the transponder module 104 (block 1010).

At this point, the transponder module 104 is able to read the occupancy sensor 112 and/or the buckle sensor 108 information (block 1012). In the case of the buckle sensor 108, this information may be "latched" or "unlatched", and may further be represented by a "0" or "1", where "0" means "unlatched" and "1" means "latched", or vice-versa. Similarly, the occupancy sensor 112 may supply a "0" to indicate that the seat is unoccupied or a "1" to indicate that the seat is occupied, or vice-versa. The transponder module 104 then sends the occupancy sensor 112 and/or the buckle sensor 108 information, along with its own ID, to the selected reader module 106 (block 1014). This operation is performed wirelessly with the help of the microcontroller 206. In an exemplary embodiment, the transponder module 104 and the reader module 106 are proximate to one another, as described above, and the wireless communication between them utilizes the NFC protocol. The reader module 106 then sends the information to the reader chip 204, which then communicates via the LIN master transceiver 208 (**FIG. 4**) through the LIN bus to the CAN network of the vehicle (block 1016), enabling the information to be displayed or otherwise supplied to the driver of the vehicle (block 1018).

The occupancy detection system disclosed herein thus consists of a master controller for a series of joined receivers consisting of reader modules and transponder modules in close proximity to one another. The reader modules are able to both send power to the transponder modules wirelessly and receive signals from the transponder modules, where the transponder modules are sending signals based on information received from buckle sensors, occupancy sensors, or both. The transponder modules, set in each seat of the vehicle, will get the latch/unlatch signals from the buckles, and send this information back through the reader modules to the main controller. The main controller will interface with the vehicle to provide user interface notifications.

As used herein, an element or step recited in the singular and proceeded with the word "a" or "an" should be understood as not excluding plural elements or steps, unless such exclusion is explicitly recited. Furthermore, references to "one embodiment" of the present disclosure are not intended to be interpreted as excluding the existence of additional embodiments that also incorporate the recited features.

While the present disclosure makes reference to certain embodiments, numerous modifications, alterations and changes to the described embodiments are possible without departing from the sphere and scope of the present disclosure, as defined in the appended claim(s). Accordingly, it is intended that the present disclosure not be limited to the described embodiments, but that it has the full scope defined by the language of the following claims, and equivalents thereof.

## Claims

1. An occupancy detection system for use in a vehicle, the occupancy detection system comprising:
a main controller comprising a microcontroller;
a transponder module coupled to a buckle sensor by a buckle sensor wire;
a reader module coupled to the main controller by a main controller wire, wherein the transponder module communicates wirelessly with the reader module.

2. The occupancy detection system of claim 1, wherein the microcontroller is a Near Field Communication (NFC) microcontroller.

3. The occupancy detection system of claim 1 or 2, wherein the transponder module communicates wirelessly with the reader module using Near Field Communication.

4. The occupancy detection system of any of the preceding claims, the main controller further comprising a multiplexer and a reader chip, wherein the reader module is controlled by the reader chip.

5. The occupancy detection system of any of the preceding claims, further comprising a seat tag disposed on a seat of the vehicle, the seat tag comprising a microchip, wherein the transponder module is controlled by the microchip.

6. The occupancy detection system of any of the preceding claims, further comprising:
a first antenna coupled to the transponder module; and
a second antenna coupled to the reader module, wherein the first antenna and the second antenna communicate wirelessly.

7. The occupancy detection system of any of the preceding claims 5 or 6, wherein the transponder module is disposed in the seat of the vehicle and the transponder module is positioned close to the seat tag.

8. The occupancy detection system of any of the preceding claims 5-7, wherein the reader module is disposed in a seat frame of the vehicle, preferably wherein, once the seat is disposed in the seat frame, the reader module and transponder module are in close proximity to one another, wherein the close proximity enables Near Field Communication.

9. A method to detect occupancy in a vehicle, the method comprising:
sending, by a reader chip, a read request command to a reader module, wherein the reader module is disposed in a seat frame of the vehicle and the read request command is in response to a request for occupancy detection of a seat located in the seat frame;
wirelessly delivering, by the reader module, a read request to a transponder module, the read request being based on the read request command;
wirelessly receiving, from the transponder module, sensor information pertaining to the seat;
wherein a Controller Area Network (CAN) system of the vehicle receives the sensor information.

10. The method of claim 9, further comprising one or more of the following:
- sending, by the reader module, the sensor information to the reader chip, wherein the reader chip is connected to the reader module by a wire;
- sending, by the reader chip, the sensor information to the CAN system of the vehicle using a Local Interconnect Network (LIN) transceiver.

11. The method of claim 9 or 10, further comprising one or more of the following:
- wirelessly delivering, by the reader module, the read request to the transponder module further comprising utilizing Near Field Communication (NFC) between the reader module and the transponder module;
- wirelessly delivering, by the reader module, the read request to the transponder module further comprising using a first antenna coupled to the reader module to transmit the read request, and using a second antenna coupled to the transponder module to receive the read request.

12. The method of any the claims 9-11, further comprising wirelessly delivering, by the reader module, power to the transponder module, enabling the transponder module to operate, preferably further comprising delivering, by the transponder module, a first portion of the power to a buckle sensor, wherein the buckle sensor is coupled to the transponder module by a first wire, wherein the first portion of the power enables the buckle sensor to operate.

13. The method of claim 12, further comprising wirelessly delivering, by the transponder module, a second portion of the power to an occupancy sensor, wherein the occupancy sensor is coupled to the transponder module by a second wire, wherein the second portion of the power enables the occupancy sensor to operate.

14. A method to deliver power to components in a vehicle, the method comprising:
receiving, by a reader chip, an indication that a transponder module in the vehicle needs to be recharged;
using a multiplexer, selecting, by the reader chip, a reader module associated with the transponder module;
sending, by the reader chip, a power delivery command to the reader module, wherein the reader module is disposed in a seat frame of the vehicle; and
wirelessly delivering, by the reader module, power to the transponder module.

15. The method of claim 14, further comprising delivering, by the transponder module, a first portion of the power to a buckle sensor, wherein the buckle sensor is connected by a first wire to the transponder module, preferably further comprising delivering, by the transponder module, a second portion of the power to an occupancy sensor, wherein the occupancy sensor is connected by a second wire to the transponder module.
